(19) Europäisches Patentamt
European Patent Office
Office européen des brevets

(11) **EP 3 457 106 A1**

(12) **EUROPÄISCHE PATENTANMELDUNG**

(43) Veröffentlichungstag:
 **20.03.2019 Patentblatt 2019/12**

(21) Anmeldenummer: **18189768.7**

(22) Anmeldetag: **20.08.2018**

(51) Int Cl.:
 **G01M 13/02** *(2019.01)* **F16H 57/01** *(2012.01)*
 **F16H 57/08** *(2006.01)*

(84) Benannte Vertragsstaaten:
 **AL AT BE BG CH CY CZ DE DK EE ES FI FR GB GR HR HU IE IS IT LI LT LU LV MC MK MT NL NO PL PT RO RS SE SI SK SM TR**
 Benannte Erstreckungsstaaten:
 **BA ME**
 Benannte Validierungsstaaten:
 **KH MA MD TN**

(30) Priorität: **13.09.2017 DE 102017121239**

(71) Anmelder: **Rolls-Royce Deutschland Ltd & Co KG**
 **15827 Blankenfelde-Mahlow (DE)**

(72) Erfinder:
 • **NOWOISKY, Dr. Sebastian**
  **15827 Blankenfelde-Mahlow (DE)**
 • **GRZESZKOWSKI, Mateusz**
  **15827 Blankenfelde-Mahlow (DE)**
 • **ENDE, Christoph**
  **15827 Blankenfelde-Mahlow (DE)**

(74) Vertreter: **Maikowski & Ninnemann**
 **Patentanwälte Partnerschaft mbB**
 **Postfach 15 09 20**
 **10671 Berlin (DE)**

(54) **VERFAHREN UND VORRICHTUNG ZUR ÜBERWACHUNG DER KINEMATIK EINES EPIZYKLISCHEN PLANETENGETRIEBES**

(57) Die Erfindung betrifft ein Verfahren zur Überwachung der Kinematik eines zu testenden epizyklischen Planetengetriebes (2), dadurch gekennzeichnet, dass
a) in einer Trainingsphase (401, 402, 403) ein Modell (420) der Kinematik anhand von an einem epizyklischen Planetengetriebe (2) mittels einer Schwingungssensorvorrichtung (1) gemessenen Daten ermittelt wird; wobei in der Folge
b) das Modell (420) in einer Testphase (411, 412, 412) zur Mustererkennung in Schwingungsdaten eines zu testenden epizyklischen Planetengetriebes (2) verwendet wird, wobei durch die Mustererkennung Winkelstellungen mindestens eines Planetenrades ($P_1$, $P_2$, $P_3$, S) im zu testenden epizyklischen Planetengetriebe (2) ermittelt werden.

 Die Erfindung betrifft auch eine Vorrichtung zur Überwachung der Kinematik eines epizyklischen Planetengetriebes (2).

Fig. 4

EP 3 457 106 A1

**Beschreibung**

Die Erfindung betrifft ein Verfahren zur Überwachung der Kinematik eines epizyklischen Planetengetriebes mit den Merkmalen des Anspruchs 1 und eine Vorrichtung zur Überwachung eines epizyklischen Planetengetriebes mit den Merkmalen des Anspruchs 9.

Epizyklische Planetengetriebe werden heute vielfach eingesetzt. So wird in Turbofan-Flugzeugtriebwerken der Fan von der Turbinenwelle unter Einsatz· eines Planetengetriebes entkoppelt. Damit kann eine Effizienzsteigerung und eine Reduzierung der Schallemission erzielt werden, da der Fan einen höheren Wirkungsgrad bei niedrigen und die Mitteldruckturbine erst bei sehr hohen Drehzahlen erreicht. Mit dem Einsatz eines Getriebes steigt jedoch der Anteil potentieller Verschleißteile. Eine Überwachung der Kinematik von Planetengetrieben ist aus der DE 10 2015 209 866 A1 bekannt.

Neben einer zeitbasierten Wartung ist auch eine Online-Überwachung der Kinematik des Planetengetriebes zur Diagnose und Prognose von Getriebeschäden sinnvoll.

Die Aufgabe wird durch ein Verfahren mit den Merkmalen des Anspruchs 1 gelöst.

Dabei kommt ein Verfahren zur Mustererkennung zum Einsatz. Zunächst wird in einer Trainingsphase ein Modell (d.h. ein Rechenmodell) der Kinematik anhand von an einem epizyklischen Planetengetriebe mittels einer Schwingungssensorvorrichtung gemessenen Daten ermittelt.

Anschließend wird das so gewonnene Modell in einer Testphase zur Mustererkennung in Schwingungsdaten eines zu testenden epizyklischen Planetengetriebes verwendet, wobei durch die Mustererkennung Winkelstellungen mindestens eines Planetenrades im zu testenden epizyklischen Planetengetriebe ermittelt werden.

Es geht somit nicht um die Erfassung eines allgemeinen Getriebezustands, sondern um die Bestimmung der Winkelstellungen der Planetenräder im zu testenden epizyklischen Planetengetriebe.

Dabei kann in einer Ausführungsform des Verfahrens die Mustererkennung in der Testphase die Schätzung einer Initialwinkelstellung der Planetenräder ermitteln. Diese Schätzung kann dann zusammen mit dem Modell dazu verwendet werden, die Winkelstellungen beim zu testenden epizyklischen Planetengetriebe zu ermitteln. Insbesondere kann in einer Ausführungsform das Modell ein Hidden Markov Modell und / oder ein künstliches neuronales Netz aufweisen.

Die Schätzung der Initialwinkelstellung der Planetenräder ist von Interesse, da die Initialwinkelstellung nicht durch Messungen von außen an dem Planetengetriebe zugänglich ist.

Für die Bildung des Modells in der Trainingsphase ist es erforderlich, eine hinreichend große Anzahl von Schwingungsdaten zu berücksichtigen. In einer Ausführungsform erstreckt sich die Trainingsphase mindestens über die für eine Zahneingriffs-Periodizität ($n_{c,spr}$) notwendige Zeit, insbesondere über die Zeit für ein ganzzahliges Vielfaches der Zahneingriffs-Periodizität ($n_{c,spr}$).

Für die Verarbeitung der Schwingungsdaten erfolgt in einer Ausführungsform ein Vorverarbeitungsschritt und / oder ein Merkmalserkennungsschritt, in dem eine Filterung der Schwingungsdaten, eine Rauschunterdrückung der Schwingungsdaten und / oder eine drehwinkelsynchrone Nachabtastung, wie sie beim TSA-Algorithmus eingesetzt wird, erfolgt.

Auch wird in einer Ausführungsform in der Trainingsphase, insbesondere zeitlich nach dem Vorverarbeitungsschritt, ein Klassifikationsschritt mit einem Klassifikator ausgeführt, wobei das Ergebnis der Klassifikation eine Ausgangswahrscheinlichkeitsmatrix umfasst. Eine Möglichkeit ist dabei, dass der Klassifikator einen k-nächste-Nachbar Klassifikator, eine Support Vector Machine und / oder ein künstliches neuronales Netz, insbesondere ein rekurrentes künstliches neuronales Netz aufweist. Diese Methoden sind im Bereich des Machine Learnings verwendete Klassifikationsmittel.

Der k-nächste-Nachbar Klassifikator zählt dabei zu den nicht-parametrischen Klassifikatoren, welche in einem überwachten Lernvorgang antrainiert werden müssen. Dies bedeutet, dass im Lernvorgang die Klassenzuordnung einzelner Merkmalsvektoren zu den einzelnen Zustandsklassen bekannt ist. Im Klassifikationsschritt in der Testphase erfolgt dann für jeden neuen, unbekannten Merkmalsvektor im Merkmalsraum ein direktes Abzählen k benachbarter Klassenrepräsentanten aus der Trainingsphase. Der angelernte k-Nächste-Nachbar Klassifikator ordnet dann den unbekannten Merkmalsvektor der Klasse mit den meisten Repräsentanten einer Klasse zu.

In einer Ausführungsform wird in der in der Testphase zur Ermittlung einer wahrscheinlichsten Winkelzustandssequenz (oder Sequenz diskreter kinematischer Drehwinkelzustände), insbesondere der Ermittlung eines Verzahnungszustandes, der am wahrscheinlichsten den beobachteten Schwingungssignalmustern in den erfassten Schwingungsdaten entspricht, ein Viterbi-Algorithmus eingesetzt wird.

Die Aufgabe wird auch durch eine Vorrichtung zur Überwachung der Kinematik eines zu testenden epizyklischen Planetengetriebes mit den Merkmalen des Anspruchs 9 gelöst.

In Zusammenhang mit den in den Figuren dargestellten Ausführungsbeispielen wird die Erfindung erläutert. Dabei zeigt

Fig. 1A bis 1D    schematische Darstellungen unterschiedlicher Stellungen von Planetenrädern in einem epizyklischen Planetengetriebe;

Fig. 2          eine Darstellung einer drehwinkelsynchronen Fensterung der Vibrationssignale;

Fig. 3          eine Darstellung eines Hidden Markov Modells;

Fig. 4          eine schematische Darstellung des Trainings eines Modells zur Mustererkennung und des Tests der Mustererkennung in einer Ausführungsform einer Vorrichtung und in einem Verfahren zur Überwachung der Kinematik eines epizyklischen Planetengetriebes;

Fig. 5          eine beispielhafte Darstellung von Verlaufspfaden eines Punktes auf einem Planetenrad;

Fig. 6          eine beispielhafte Darstellung von Signalverläufen (Amplitude) über den Drehwinkel eines Carriers (Steg);

Fig. 7          eine Darstellung von Sequenzfehlern in der Klassifikation;

Fig. 8          eine Darstellung der Schätzerfolgsquote.

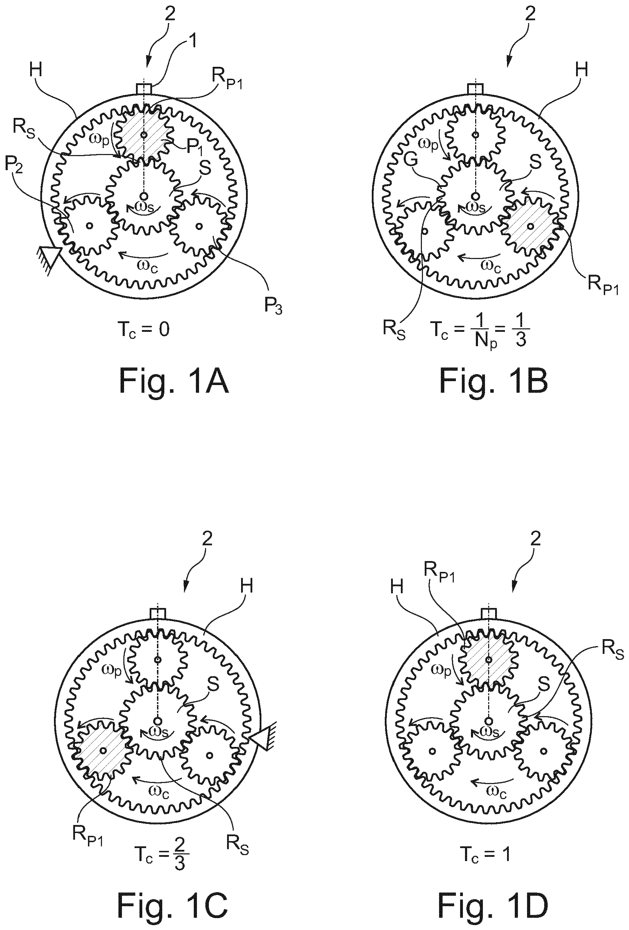

Bevor auf Ausführungsbeispiele eingegangen wird, soll anhand der Fig. 1A bis 1D die Funktion und die Kinematik eines epizyklischen Planetengetriebes 2 dargestellt werden.

Die Fig. 1A bis 1D zeigen jeweils schematisch ein an sich bekanntes epizyklisches Planetengetriebe 2 mit festem Hohlrad H (siehe Darstellung in der Fig. 1A) und Planetenräder $P_1$, $P_2$, $P_3$. Der Carrier (auch Planetenträger oder Steg genannt), der die Planetenräder $P_1$, $P_2$, $P_3$ untereinander fest verbindet, ist hier aus Gründen der Übersichtlichkeit nicht dargestellt.

Ein Planetenrad $P_1$, $P_2$, $P_3$ des Getriebes besitzt jeweils die Drehfrequenz $f_P = \omega_P/2\pi$. Die mit dem Carrier verbundene Welle weist die Abtriebsfrequenz $f_C = \omega_C/2\pi$ auf. Das Sonnenrad S weist die Drehfrequenz $f_S = \omega_S/2\pi$ auf.

Die Verwendung eines epizyklischen Planetengetriebes 2 mit drei Planetenrädern $P_1$, $P_2$, $P_3$ ist hier rein beispielhaft gewählt. Es können auch mehr, insbesondere fünf Planetenräder verwendet werden. Auch ist es nicht zwingend, dass bei festem Hohlrad H der Antrieb über das Sonnenrad S und der Abtrieb über den Carrier erfolgt. Grundsätzlich können der Antrieb oder der Abtrieb auch jeweils durch eine Paarung von Hohlrad H, Sonnenrad S oder Carrier vorgenommen werden. Auch ist es grundsätzlich möglich, dass jeweils Hohlrad H, Sonnenrad S oder der Carrier fest angeordnet sind.

Eine Sensorvorrichtung 1 dient der Erfassung des Körperschalls im epizyklischen Planetengetriebe 2. Der Körperschall sind die Schwingungen, die sich im Festkörper des epizyklischen Planetengetriebes 2 ausbreiten, so dass im Folgenden auch von Schwingungsdaten gesprochen wird. Eine mögliche Ausführungsform einer Sensorvorrichtung 1 weist einen piezoelektrischen Sensor auf, mit dem Körperschall erfassbar ist.

Ausgangspunkt für die Ausführungsformen, die im Folgenden dargestellt werden, ist die Auswertung des am oder im epizyklischen Planetengetriebes 2 detektierten Körperschalls.

Viele Getriebeschäden (z.B. Lagerschäden oder Verzahnungsschäden) an epizyklischen Planetengetrieben 2 beeinflussen die Körperschallanregung am Zahneingriffspunkt der Verzahnung. Damit wirkt sich ein Getriebeschaden auf das Schwingungsverhalten des Planetengetriebes 2 aus.

Aus diesem Grund sind Beschleunigungsaufnehmer zur Erfassung des Getriebezustands geeignet. Allerdings empfängt ein Beschleunigungsaufnehmer auf Grund der um das Sonnenrad S rotierenden Planetenräder $P_1$, $P_2$, $P_3$ und mehrerer gleichzeitiger Planetenzahneingriffe ein komplexes amplitudenmoduliertes Schwingungssignal, das zunächst keine Rückschlüsse auf mögliche Getriebeschäden zulässt.

Es ist aber möglich - wie im Folgenden gezeigt wird -, die aus Getriebeschäden resultierenden Signaturen, d.h. Muster, in den erfassten Vibrationssignalen mittels bestimmter Mustererkennungsverfahren und Vorrichtungen zur Mustererkennung den Schäden zuzuordnen.

Ein Verfahren, um stochastische Vibrationssignalanteile gegenüber deterministischen Vibrationssignalanteilen einzelner Planetenräder $P_1$, $P_2$, $P_3$ (d.h. den potentiellen Schadenssignalen) zu dämpfen, ist das Time-Synchronous-Averaging Verfahren (TSA), welches erstmals von McFadden (Technique for calculating the time domain averages of the vibration of the individual planet gears and the sun gear in an epicyclic gearbox. In: Journal of Sound and Vibration 144 (1991), Nr. 1, 163-172) entwickelt wurde.

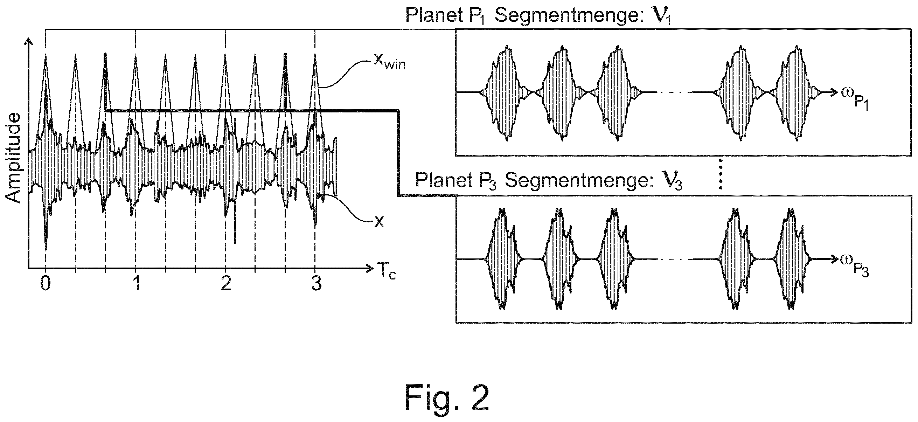

Nachfolgend wird das TSA Verfahren anhand der Fig. 2 genauer erläutert, wobei auf die Kinematik des epizyklischen Planetengetriebes 2 gemäß den Fig. 1A bis 1D Bezug genommen wird.

Angenommen, alle Zahnradzähne des Planetengetriebes 2 befinden sich - wie in Fig. 1A dargestellt - zum Zeitpunkt $Tc=0$ in der Initialwinkelstellung $G_0 = f(\omega_S^{(0)}, \omega_C^{(0)}, \omega_P^{(0)})$. Damit kann genau festgelegt werden, welche Zahnradzähne in der Initialwinkelstellung $G_0$ genau ineinandergreifen.

Treibt nun das Antriebszahnrad (im Beispiel der Fig. 1A bis 1D das Sonnenrad S) die Planetenräder $P_1$, $P_2$, $P_3$ und somit die Stegwelle in Antriebs-Drehrichtung an, dann befindet sich die Stegwelle bei $T_C=1$ (Fig. 1D) wieder in ihrer Initialwinkelstellung.

In Fig. 1A bis 1D ist das erste Planetenrad $P_1$ durch eine dunkle Farbgebung hervorgehoben. Auf dem ersten Planetenrad $P_1$ ist jeweils ein Zahn $R_{P1}$ hervorgehoben. Auf dem Sonnenrad jeweils ein Zahn $R_S$.

Die Planetenräder $P_1$, $P_2$, $P_3$ und das Sonnenrad S besitzen jedoch in diesem Winkelpunkt gegenüber der Initialstellung eine andere absolute Drehwinkelstellung, wie in Fig. 1D bei $T_C=1$ anhand der Zahnmarkierungen $R_{P1}$, $R_S$ auf dem Planetenrad $P_1$ und dem Sonnenrad S abgelesen werden kann.

Demnach wird die Initialwinkelstellung $G_0$ erst nach $n_{c,spr}$ Stegwellenumdrehungen (siehe unten) erreicht. Diese als "Zahneingriffs-Periodizität" beschriebene Umdrehungszahl berechnet sich mithilfe der kleinsten gemeinsamen Vielfachen (kgV) der Zähnezahlen (nach D'Elia, Mucchi, Cocconcelli, On the identification of the angularposition of gears forthe diagnostics of planetary gearboxes. Mechanical Systems and Signal Processing 83, (2017), S. 305-320):

$$n_{c,spr} = \frac{kgV(kgV(z_P, z_H), kgV(z_S, z_P))}{z_H} \qquad (1)$$

mit

$z_H$:    Anzahl Zähne Hohlrad H
$z_S$    Anzahl Zähne Sonnenrad S
$z_P$    Anzahl Zähne Planetenräder $P_1$, $P_2$, $P_3$.

Bei einem beispielhaften Planetengetriebe mit $z_H$=120, $z_P$=35 und $z_S$=50 ergibt sich ein ncspr = 35.

Beim oben erwähnten TSA-Verfahren werden die kontinuierlich aufgezeichneten Sensorsignale (d.h. die Vibrationssignale des Körperschalls) zunächst drehwinkelsynchron nachabgetastet und anschließend in Segmente geteilt, so dass die Segmentlänge der Umdrehungsperiode eines zu untersuchenden Zahnrades entspricht.

Wird das Verfahren auf ein Planetenrad $P_1$, $P_2$, $P_3$ mit der relativen Drehfrequenz $f_C$+$f_P$ angewendet, dann entspricht die Länge eines Segments der Periode ($f_C$-$f_P$)-1 (nach Yu, Early Fault Detection for Gear Shaft and Planetary Gear Based on Wavelet and Hidden Markov Modeling, Dissertation, University of Toronto, 2011).

Hierbei werden die Signaldaten $x$ in jedem Segment mit einer geeigneten Fensterfunktion $w_{win}$ multipliziert,

$$x_{win} = x\, w_{win} \qquad (2)$$

wobei das Maximum der Fensterfunktion mit dem Stegdrehwinkelpunkt zusammenfällt, wenn sich das betrachtete $k$-te Planetenzahnrad direkt unterhalb der Sensorvorrichtung 1 für die Vibrationen befindet. Diese Segmentierung wird für jedes Planetenrad $P_1$, $P_2$, $P_3$ durchgeführt; so dass die Segmente eines Planetenrades $P_1$, $P_2$, $P_3$ wie folgt der jeweiligen Segmentmenge $v_k$ zugeordnet werden können.

$$v_1 = \left\{ x_{win}(T_C = 0), x_{win}(T_C = 1), \dots, x_{win}\left(T_C = n_{spr}\right) \right\} \qquad (3)$$

$$v_2 = \left\{ x_{win}(T_C = 1/3), x_{win}(T_C = 4/3), \dots, x_{win}\left(T_C = n_{spr} + 1/3\right) \right\} \qquad (4)$$

$$v_3 = \left\{ x_{win}(T_C = 2/3), x_{win}(T_C = 5/3), \dots, x_{win}\left(T_C = n_{spr} + 2/3\right) \right\} \qquad (5)$$

Bei ausreichend umfangreichen Messdaten liegen Messreihen mehrerer Zahneingriffs-Periodizitäten bei konstanten Getriebeparametern (Drehzahl, Abtriedrehmoment, Temperatur) vor, so dass zu jedem $x_{win}$ ($Tc$=$n$ * 1/3) mit

$n \in \mathbb{N}$ mehrere gefensterte Vibrationssignale vorhanden sind.

Unter der Annahme, dass die Vibrationssignalmuster innerhalb gleicher Verzahnungssegmentmengen $v_1$ für gleiche $T_C$ im Idealfall gleich sind, werden die Signale $x_{win}$ ($T_C$=$n$ * 1/3) für jedes $n$ = 0, ... , $n_{spr}$ anschließend gemittelt.

Mithilfe des TSA-Verfahrens wird demnach der Zeitbereich der Vibrationsschwingungssignale, wenn sich ein Planetenrad $P_1$, $P_2$, $P_3$ in der Nähe der Sensorvorrichtung 1 befindet, isoliert ausgewertet von den Zeitbereichen, wenn

sich kein Planetenrad $P_1$, $P_2$, $P_3$ in der Nähe der Sensorvorrichtung 1 aufhält (siehe Ha et al., Autocorrelation-based time synchronous averaging for condition monitoring of planetary gearboxes in wind turbines. In Mechanical Systems and Signal Processing, 70-71 (2016), S. 161-175 und McFadden *op. cit.*).

Zusätzlich werden durch eine anschließende Mittelung der gefundenen Signaldaten stochastische Vibrationseinflüsse gedämpft.

In Fig. 2 ist links das Amplitudensignal der Vibrationen über drei *Tc* Zyklen aufgetragen. Rechts sind die Vibrationssignale der zwei Segmentmengen $v_1$ und $v_3$ für die zwei Planetenräder $P_1$, $P_3$ aufsummiert über dem Planetendrehwinkel $\omega_p$ des jeweiligen Planeten aufgetragen. Die Fensterung der Vibrationssignale erlaubt zum einen eine Trennung der dominierenden Vibrationsanteile unterschiedlicher Verzahnungen und somit unterschiedlicher Drehwinkelstellungen des Planetengetriebes und zum anderen kann mittels der Fensterung der Leck-Effekt, der sich im Rahmen einer Weiterverarbeitung der Vibrationssignale im Fourierspektrum ergibt, reduziert werden.

Das TSA-Verfahren wird zur drehwinkelsynchronen Mittelung der Vibrationsdaten eingesetzt. Eine Mittelung kann hierbei bei Kenntnis der Zahneingriffs-Periodizitäten unabhängig von der Initialwinkelstellung $G_0$ durchgeführt werden.

Im Folgenden werden in Ausführungsformen für ein Verfahren oder eine Vorrichtung aus den einzelnen gefensterten Signalen Merkmale gewonnen, welche mithilfe eines Mustererkennungssystems eine Detektion von lokalen Planetenzahnschäden ermöglichen.

Jedoch muss vorab die Trennungswirksamkeit der gewonnenen Merkmale bzgl. unterschiedlicher Schadschweren bewertet werden. Die Bewertung soll hierbei für unterschiedliche Drehzahl- und Lastbereiche erfolgen, womit mehrere Testreihen an einem epizyklischen Planetengetriebe 2 durchgeführt werden. Hierzu müssen jedoch die gefensterten Signalabschnitte zwischen unterschiedlichen Messungen korrekt dem kinematischen Zustand des epizyklischen Planetengetriebes 2 zugeordnet.

Dies ist nur möglich, wenn die drei Drehwinkel $\omega_S$, $\omega_P$, $\omega_C$ bekannt sind.

Die Größen $\omega_S$ und $\omega_C$ können mittels eines Inkrementalgebers mit Nullimpulsausgang an der Antriebswelle bzw. der Abtriebswelle sensorisch erfasst werden.

Um jedoch auch den Planetendrehwinkel $\omega_P$ zu erfassen, müsste man eine Sensorik im Inneren des Getriebegehäuses des epizyklischen Planetengetriebes 2 vorsehen.

Im Folgenden wird der Planetendrehwinkel $\omega_P$ aus den restlichen Sensordaten (d.h. den Körperschall- bzw. den Vibrationsdaten) geschätzt, um die Merkmalsausprägungen zwischen unterschiedlichen Messungen evaluieren zu können. Ohne Kenntnis des Planetendrehwinkels $\omega_P$ ist auch eine Bestimmung der Getriebe-Initialdrehwinkelstellung $G_0$ aus den Messdaten zunächst nicht möglich.

In den Ausführungsformen, die im Folgenden beschrieben werden, kann die Initialdrehwinkelstellung $G_0$ des epizyklischen Planetengetriebes 2 bestimmt werden, wobei eine Mustererkennung vorgenommen wird. Eine Mustererkennung 404 kann z.B. ein künstliches neuronales Netz (KNN), insbesondere rekurrentes künstliches neuronales Netz, eine Support-Vektor-Maschine (SVM) oder auch ein Hidden Markov Model (HMM) verwenden.

Im Folgenden wird auf eine Mustererkennung mit einem Hidden Markov Model eingegangen.

Zustände eines Systems können als stochastischer Prozess durch sogenannte Markov-Ketten abgebildet werden. Hierbei wird die Kenntnis über die vergangenen Zustände für die Vorhersage zukünftiger Zustände ausgenutzt. Wie viel Zustände aus der Vergangenheit für die Schätzung des zukünftigen Systemzustands berücksichtigt werden, wird durch die Ordnung der Markov-Kette vorgegeben

Die Markov-Kette muss sich zu jedem Zeitpunkt in einem der definierten Zustände der Zustandsmenge $S = \{s_1, s_2, ...,s_n\}$ befinden.

Eine Markov-Kette kann zu einem stochastischen Modell, welches aus beobachteten und unbeobachteten Zuständen besteht, erweitert werden. Dabei handelt es sich um ein Hidden Markov Model, da die Zustände des Modells nicht direkt beobachtet werden, sondern stattdessen nur die Ausgabe $V = \{v_1, v_2, ..., v_n\}$, welche von den Zuständen produziert wird.

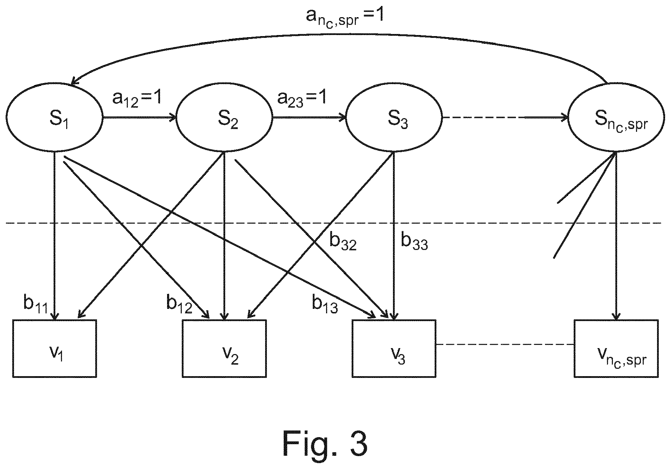

Die Fig. 3 zeigt schematisch ein derartiges Hidden Markov Model. Die Übergangswahrscheinlichkeiten zwischen den Zuständen werden in der Matrix $A$ angegeben und die Wahrscheinlichkeiten, dass im Zustand $s_i$ eine bestimmte Emission $v_i$ beobachtet wird, werden in der Matrix $B$ (Ausgangswahrscheinlichkeitsmatrix) angegeben. Hidden Markov Modelle wurden bereits zur Beschreibung von Getriebezuständen eingesetzt (Miao et al., A probabilistic description scheme for rotating machinery health evaluation. In: Journal of Mechanical Science and Technology 24 (12) (2010), S. 2421-2430).

In den bekannten Anwendungen wird aber der Degradierungsprozess des Getriebes als Zustand beschrieben, um aus den beobachteten Daten mithilfe eines antrainierten Markov Modells auf den Getriebezustand zu schließen. Dabei können z.B. die Zustände fehlerfrei, fehlerbehaftet oder zerstört unterschieden werden.

Die hier beschriebenen Ausführungsformen verwenden Hidden Markov Modelle jedoch zur Beschreibung des kinematischen Getriebezustandes (insbesondere der Winkelstellungen eines Zahnrads) des epizyklischen Planetengetriebes 2 im Rahmen einer Mustererkennung.

Wendet man ein Hidden Markov Modell auf die oben beschriebene Zahneingriffsschätzung (hierfür $\omega_P$) im epizyklischen Planetengetriebe 2 an, dann wird demnach nur die Ausgabe anhand von erzeugten Schwingungssignalmustern beobachtet und die Zustände des Modells werden durch diskrete Drehwinkelstellungen $\omega_S$, $\omega_P$, $\omega_C$ des epizyklischen Planetengetriebes 2 beschrieben. Die genauen Drehwinkel aller Drehachsen bleiben hierbei verborgen.

In der Fig. 3 beschreibt ein Zustand $s_i$ eine diskrete Drehwinkelstellung des epizyklischen Planetengetriebes 2 mit den Drehwinkeln $\omega_S$, $\omega_P$, $\omega_C$ im Zustand $i$. Dieser Zustand $i$ emittiert mit der Wahrscheinlichkeit $b_i$ Schwingungssignalmuster aus der Ausgabemenge $V$. Hierbei stimmt die Elementanzahl der Zustandsmenge und Ausgabemenge überein. Mit der Annahme, dass jeder Zustand ein anderes Schwingungssignalmuster $v_i$ emittiert, handelt es sich bei $B$ in diesem Fall um eine Diagonalmatrix.

In dem beschriebenen Ansatz vereinfacht sich die Übergangsmatrix $A$, wie in Fig. 3 dargestellt, da die Zahneingriffszustände des Getriebes nacheinander eintreten und somit alle Einträge bis auf $a_{i,i}+_1$ und $a_{nc,spr,1}$ zu Null werden. Dementsprechend emittiert diese Zustandsabfolge ebenfalls eine feste Sequenz von Schwingungssignalmustern.

Ziel ist es nun, die Emissionssequenz zu analysieren und den Pfad durch den Zustandsgraphen zu finden, der nach dem aufgebauten Hidden Markov Modell die beobachtete Emissionssequenz ausgibt. Anders ausgedrückt, es wird die Abfolge von Verzahnungszuständen gesucht, die am wahrscheinlichsten den beobachteten Schwingungssignalmustern einer Messung zugeordnet werden kann. Sobald die Zustandsabfolge bekannt ist, kann die Initialwinkelstellung Go bestimmt werden.

Für das Aufdecken der wahrscheinlichsten Zustandssequenz einer beobachteten Emissionssequenz kann der Viterbi-Algorithmus (siehe z.B. Forney, The Viterbi algorithm. In: Proceedings of the IEEE, 61 (1973), Nr. 3, S. 268-278) verwendet werden. Alternativ können auch der Lazy Viterbi-Algorithmus (Feldman et al., A Fast Maximum-Likelihood Decoder für Convolutional Codes; In: Proceedings ofthe Vehicular Technology Conference, 2002-Fall, 2002 IEEE 56th), der Forward-Algorithmus, der Backward-Algorithmus, ein Posterior-Decoding oder ein Forward-Backward Algorithmus wie der Baum-Welch-Algorithmus verwendet werden.

Hierbei wird zunächst ein Zustandsübergangsdiagramm über alle Zeitpunkte und alle Zustände erzeugt. Anschließend wird mithilfe der Ausgangswahrscheinlichkeitsmatrix B des Hidden Markov Modells für eine gegebene Sequenz in jedem Knoten des Übergangsdiagramms die Wahrscheinlichkeit berechnet, mit der dieser Knoten vom Vorgängerknoten aus erreicht wird.

Auf diese Weise kann für eine gegebene Sequenz der höchstwahrscheinlichste Zustandspfad errechnet werden, so dass durch anschließendes rückwärts gerichtetes Auslesen der Knotenpunkte jeder beobachteten Emission der verdeckte Zustand zugeordnet werden kann.

Um das Hidden Markov Modell und den Viterbi-Algorithmus erfolgreich zur Schätzung der Initialwinkelstellung $G_0$ einsetzen zu können, sollten sich die emittierten Schwingungssignalmuster bestmöglich voneinander unterscheiden. Somit sollte jede eingreifende Zahneingriffskombination eine hohe "Einzigartigkeitsgüte" im Schwingungssignal aufweisen, so dass anschließend die Schwingungssignalmuster trennungswirksam voneinander separiert werden können.

Diese Voraussetzung kann als qualitativ gegeben angesehen werden, da Zahnräder gewissen Fertigungsschwankungen, wie Teilungsabweichungen und Zahnprofilabweichungen unterliegen. Somit nutzen die hier beschriebenen Ausführungsformen die ohnehin gegebenen Fertigungsschwankungen aus, um Schwingungssignale voneinander unterscheidbar zu machen.

Als Folge dieser Geometrieschwankungen unterscheiden sich die Kontaktlinien auf den Zahnflanken verzahnter Zahnräder beim Wälzkontakt geringfügig. Dies hat einen Einfluss auf das Schwingungsverhalten der Verzahnung (siehe z.B. Heider, Schwingungsverhalten von Zahngetrieben: Beurteilung und Optimierung des Schwingungsverhaltens von Stirnrad- und Planetengetrieben, Verlag Dr. Hut, 2012; Inalpolat, Murat; Kahraman, Ahmet (2010): A dynamic model to predict modulation sidebands of a planetary gear set having manufacturing errors. In: Journal of Sound and Vibration 329 (4), 2010), so dass die Hypothese aufgestellt werden kann, dass sich die emittierten Schwingungssignalmuster bei jeder nachfolgenden Zahneingriffskombination voneinander unterscheiden.

Darüber hinaus bietet eine Auswertung der Emissionssequenz mithilfe des Viterbi-Algorithmus den Vorteil, dass sich nicht zwangsläufig alle beobachteten Schwingungssignalmuster voneinander unterscheiden müssen, sondern es genügt, wenn ein Teil der erzeugten Emissionssequenz innerhalb einer Zahneingriffs-Periodizität von anderen Emissionssequenzteilen unterschieden werden kann. Wenn dies gegeben ist, kann eine Identifizierung der ursprünglichen Zustandssequenz erfolgreich durchgeführt werden.

Die Ausführungsformen zur Überwachung der Kinematik eines epizyklischen Planetengetriebes 2 verwenden eine Schätzung der Initialwinkelstellung $G_0$ im Zusammenhang mit einer Mustererkennung.

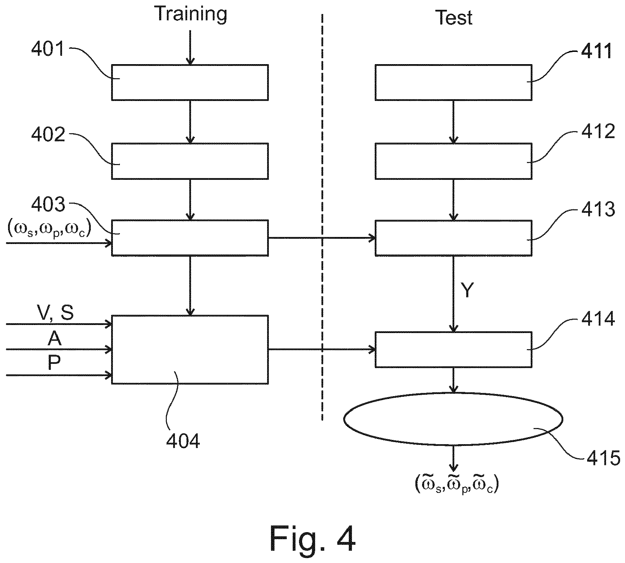

Die Fig. 4 stellt Verarbeitungsstufen des Mustererkennungssystems beispielhaft dar. Dieses wird in die Teilarbeitsschritte "Training" (in Fig. 4 links) und "Test" (in Fig. 4 rechts) aufgeteilt.

Die Trainingsphase dient dabei der Bildung eines Modells (d.h. eines Rechenmodells) der Kinematik des epizyklischen Planetengetriebes 2, wie dies grundsätzlich aus dem maschinellen Lernen bekannt ist.

In einem optionalen Vorverarbeitungsschritt 401 können die von der Schwingungssensorvorrichtung 1 erfassten Daten z.B. mit einem Bandpassfilter gefiltert werden. Damit können z.B. Resonanzschwingungen herausgefiltert werden, um die Trennungswirksamkeit für die Merkmale in den nachfolgenden Schritten zu verbessern.

Ferner kann zusätzlich oder alternativ eine Rauschunterdrückung ausgeführt werden. Auch ist es möglich z.B. eine Glättung der gemessenen Daten durchzuführen.

Dann werden zunächst in der Trainingsphase aus den gefensterten Schwingungsmessdaten (siehe Fig. 2 und die dazugehörige Beschreibung) geeignete Merkmalsausprägung (z.B. und u.a. Mittelwert, Standardabweichung, Kurtosis der vorverarbeiteten Rohdaten) gewonnen (Schritt 402), was auch als Feature Extraction bezeichnet wird. Hierzu werden aus ein- oder mehrdimensionalen Signaldarstellungen im Drehwinkelbereich oder Zeit-Frequenz-Bereich eindimensionale Merkmale, welche charakteristische Merkmalsausprägungen bei bestimmten Verzahnungszuständen aufzeigen, berechnet.

Grundsätzlich ist es möglich, dass alle ermittelten Merkmale mit gleicher Wertigkeit in das nachfolgende Training des Klassifikators (Schritt 403) einbezogen werden. Es ist aber auch möglich, dass eine Gewichtung der Merkmale nach der Maßgabe eines definierten Gütefunktionals (z.B. der F-Ratio) vorgenommen wird. Wenn die ermittelten Merkmale eine Drehzahlfrequenzabhängigkeit aufweisen, könnte diese Information bei der Merkmalsgewinnung berücksichtigt werden.

In der Trainingsphase (Schritt 403) wird der Klassifikator (z.B. eine SVM oder ein KNN) mit den Drehwinkeldaten $\omega_S$, $\omega_P$, $\omega_C$ und den Merkmalsausprägungen der einzelnen Schwingungssignalfenster gespeist, so dass die Klassenzuordnung der Muster im Merkmalsraum in einem überwachten Training trainiert werden kann. Die Drehwinkeldaten $\omega_S$, $\omega_P$, $\omega_C$ ermöglichen hierbei eine genaue Zuordnung eines beobachteten Schwingungssignalmusters zu einer Zustandsklasse. Auch bei der Klassifikation (Schritt 403) kann eine Gewichtung vorgenommen werden. So können z.B. Fenstersignale, die mit größerer Unsicherheit erkannt wurden als andere (z.B. weil sie näher an einer Cluster-Grenze liegen), mit einer entsprechend niedrigeren Gewichtung verwendet werden. Dafür würde in der Testphase neben dem Vektor mit den Observationen noch ein Vektor erstellt werden, der die Sicherheit jeder Observation beschreibt. Diese Zusatzinformation könnte dann auch an geeigneter Stelle in den Viterbi-Algorithmus (Schritt 414, siehe unten) eingebracht werden.

Liegen genügend lange Sequenzen vor, so besteht die Möglichkeit, mit dem Viterbi-Algorithmus (Schritt 414) nach einem Ausschnitt zu suchen, an dem die Klassifizierung mit hoher Wahrscheinlichkeit besonders gut funktioniert hat. Ein solcher Abschnitt würde sich z.B. dadurch bemerkbar machen, dass viele konsekutive Einzelobservationen auftreten.

Nach abgeschlossenem Trainingsvorgang ist jedoch nicht auszuschließen, dass bestimmte Zustände nicht voneinander unterscheidbare Muster emittieren. Dies führt dazu, dass unterschiedliche Zustände $s_i$ gleiche Beobachtungen $v_i$ emittieren und somit Einträge außerhalb der Diagonalen der Ausgangswahrscheinlichkeitsmatrix B ungleich Null werden.

Somit lassen sich mit der Ausgangswahrscheinlichkeitsmatrix *B* Zustände beschreiben, welche eine geringe "Einzigartigkeitsgüte" bei einem bestimmten Zahneingriff besitzen. Um die Ausgangswahrscheinlichkeitsmatrix B zu bestimmen, werden die falsch klassifizierten Beobachtungen in den Trainingsdaten ausgewertet. Sobald die Matrix *B* bekannt ist, kann das Hidden Markov Modell aufgebaut werden (Schritt 404). Dabei gehen in das Hidden Markov Modell noch der Beobachtungsraum V ($v_i$ in Fig. 3), der Zustandsraum S ($s_i$ in Fig. 3), die Übergangswahrscheinlichkeitsmatrix A ($a_{ij}$ in Fig. 3) und ggf. Anfangswahrscheinlichkeiten P ein.

In diesem Punkt (Schritt 404) gilt das Mustererkennungssystem als antrainiert; d.h. es liegt ein trainiertes Modell in Form eines Computermodells (Klassifikator 403, Hidden Markov Modell 404) vor, das zur Erkennung von Getriebeschäden im Rahmen von Tests verwendbar ist (Schritte 413, 414). Die Verwendung des Modells in der Testphase ist zeitlich der Trainingsphase des Computermodells nachgeordnet und kann dann beliebig oft verwendet werden.

Als nächstes werden in der Testphase Testdaten (rechte Seite in Fig. 4), d.h. kinematische Daten des epizyklischen Planetengetriebes 2, verarbeitet, welche keine Drehwinkeldaten beinhalten. Das System kann dann hieraus die Zustandssequenz selbstständig berechnen.

Hierzu sind die ersten beiden Verarbeitungsstufen mit Vorverarbeitung (Schritt 411) und Merkmalsgewinnung (Schritt 412) sind analog zum Trainingsprozess (linke Seite Fig. 4).

Der Klassifikator (Schritt 413) ordnet hierbei jedes Schwingungssignalfenster einem Element der Beobachtungsmenge *V* zu, so dass sich für eine gesamte Messung eine Emissionssequenz ergibt.

Anschließend (Schritt 414) wird auf die Emissionssequenz der Viterbi-Algorithmus angewendet und die wahrscheinlichste ursprüngliche Zustandssequenz aufgedeckt. Ist die Zustandssequenz bekannt, kann abschließend die Initialwinkelstellung $G_0$ *des* Planetengetriebes 2 berechnet werden.

Wie bereits erwähnt, ist es für den Trainingsvorgang nach Fig. 4 notwendig, dem Klassifikator die Drehwinkelgrößen $\omega_S$, $\omega_P$, $\omega_C$ zusätzlich zu den gefensterten Signalen zur Verfügung zu stellen (Schritt 403).

Um jedoch im Training die akkurate Drehwinkelstellung aller drei Drehwinkelgrößen $\omega_S$, $\omega_P$, $\omega_C$ zu erfassen, wurde das nachfolgend beschriebene Messverfahren verwendet.

Die Idee des Messverfahrens basiert auf der magnetischen Erfassung des Planetenlaufpfades und der Nullwinkelposition des Sonnenrades S. Hierzu wird in der praktischen Realisierung ein Permanentmagnet mit geringer Eigenmasse und hoher magnetischer Remanenz zum einen am Planetenrad $P_1$, $P_2$, $P_3$ im Punkt $M_P$ angeordnet, so dass dieser feste Punkt bei Rotation des Planetenrades $P_1$, $P_2$, $P_3$ einen sternförmigen Pfadverlauf aufweist. Zum anderen wird ein Permanentmagnet am Sonnenrad S im Punkt $M_S$ zur Erfassung der Sonnenrad-Nullwinkelposition angeordnet.

Der Punkt $M_P$ erreicht hierbei nach

$$n_{c,pr} = \frac{kgV(z_P, z_H)}{z_H} \qquad (6)$$

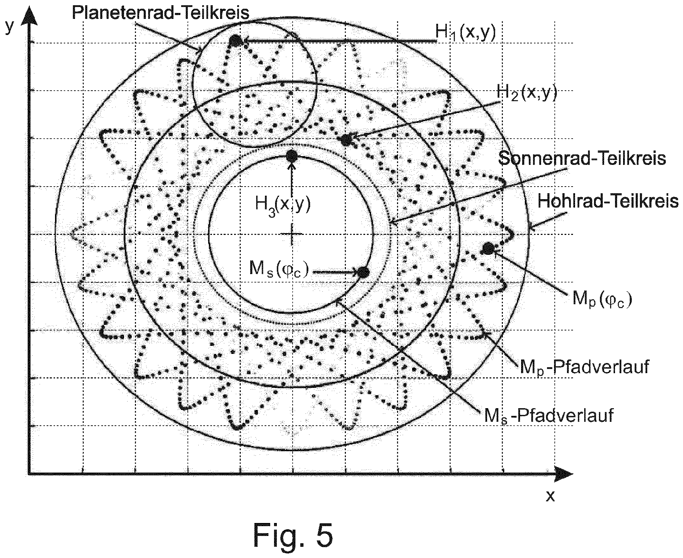

Stegumdrehungen seine Ausgangsposition. Dieser Ausgangspunkt des Magneten bzw. der Drehwinkelnullpunkt des Planetenrades $P_1$, $P_2$, $P_3$ wird magnetisch abgetastet. Fig. 5 zeigt den $Mp$-Pfadverlauf (Planetenpfad) für $n_{c,pr}$ = 7 Stegumdrehungen, wobei für jede Stegumdrehung der betreffende Pfadabschnitt in einer anderen Graustufe dargestellt ist. Die einzelnen Punkte dem Mp-Pfadverlauf werden zeitlich äquidistant aufgenommen. Da die Geschwindigkeit der Punkte bei der Bewegung aber nicht konstant ist, ergeben sich unterschiedliche Punktabstände.

Aufgrund der Überlappungen des $Mp$-Pfadverlaufes innerhalb von $n_{c,pr}$ Stegumdrehungen wird der sternförmige Pfad für eine sichere Erkennung an zwei fixen Punkten abgetastet, welche in der Fig. 5 mit $H_1$ $(x, y)$ und $H_2$ $(x, y)$ (Positionen der abtastenden Hall-Sensoren) gekennzeichnet sind. Für die Erfassung der magnetischen Flussdichte, die vom Permanentmagneten erzeugt wird, werden kommerziell verfügbare lineare Hall-Sensoren verwendet.

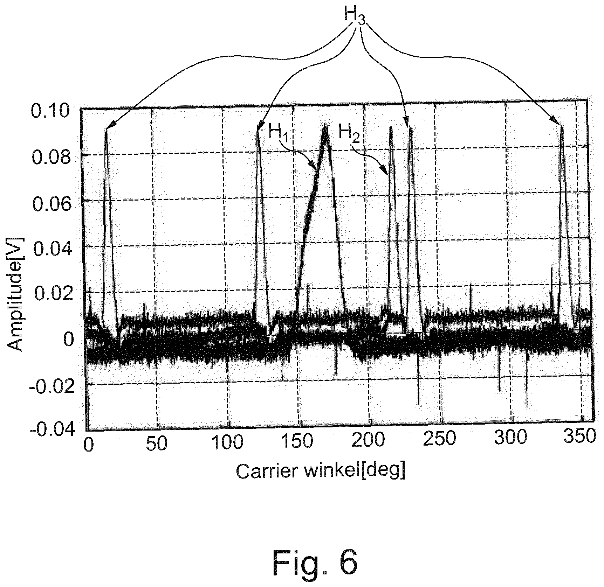

Der Abtastpunkt $H_1$ dient zur sicheren Identifizierung des $M_p$-Pfadabschnitts, der vom Permanentmagneten beim Durchlaufen seiner Ausgangsposition erreicht wird. Jedoch wird der Abtastpunkt $H_1$ mit einer geringeren Geschwindigkeit passiert, wodurch die magnetische Flussdichte in diesem Punkt einen breiten Gipfel im Zeitbereichssignal besitzt (siehe Fig. 6).

Ein Maximum der magnetischen Flussdichte kann nicht exakt angegeben werden, wodurch ein Maximalwert und somit auch der genaue Zeitpunkt, wenn Magnet $M_p$ Sensor $H_1$ passiert, mit einer höheren Unsicherheit behaftet ist.

Aus diesem Grund wurde zusätzlich der Abtastpunkt $H_2$ eingeführt, der vom Planetenpunkt $Mp$ mit einer höheren Geschwindigkeit als $H_1$ passiert wird. Deshalb besitzt die magnetische Flussdichte in diesem Punkt einen schmaleren Gipfel im Zeitbereichssignal und das Maximum kann mit einer geringeren Unsicherheit bestimmt werden. Durchläuft nun der markierte Planetenpunkt diese beiden Abtastpunkte $H_1$ und $H_2$ dann kann der $M_P$-Pfad alle $n_{c,pr}$ Stegumdrehungen sicher detektiert werden.

Die Sensoren $H_1$ und $H_2$ realisieren eine Detektion des Zeitpunkts gleicher Zahneingriffe zwischen Planetenradzähnen und Hohlradzähnen. Um jedoch die initiale Zahneingriffsstellung $G_0$ des Planetengetriebes 2 zu bestimmen, müssen, wie in Gleichung (1) zusammengefasst, auch die Zahneingriffe der Planetenräder $P_1$, $P_2$, $P_3$ mit dem Sonnenrad S berücksichtigt werden. Dies wird durch Abtastung der Sonnenzahnrad-Drehwinkelstellung mit einem weiteren Permanentmagneten $M_S$ und einem linearen Hall-Sensor am Ort $H_3(x, y)$ (siehe auch Fig. 5) erreicht.

In Fig. 5 wird die Position des Permanentmagneten $M_s$ in Abhängigkeit vom Drehwinkel des Carriers C angegeben.

In Fig. 6 sind die Zeitsignalverläufe der drei Hall-Sensoren $H_1$, $H_2$, $H_3$ beim Passieren der beiden Magneten $M_p$ und Ms dargestellt. Hierbei zeigt sich, dass der Sensor $H_2$ gegenüber dem Sensor $H_1$ für die Bestimmung des Initialzahneingriffszeitpunkts $G_0$ aufgrund des schmaleren Peaks besser geeignet ist.

Nach bisherigem Stand der Technik ist zwar eine Fensterung von Maschinenvibrationen möglich, jedoch konnten bisher die gefensterten Schwingungssignale nicht messreihenübergreifend einzelnen Zahneingriffspunkten ohne zusätzliche Sensorik zugeordnet werden.

Mit den dargestellten Ausführungsformen ist diese Zuordnung nun möglich und eine verzahnungsselektive Getriebezustandsüberwachung der Kinematik kann umgesetzt werden. Hierzu ist eine aussagekräftige Trendanalyse einzelner Verzahnungen möglich, um lokal auftretende Zahnschäden oder andere Abweichungen im Schwingungssignal frühzeitig detektieren zu können.

Es wurden einige Versuche mit variabler Drehzahl und variablem Abtriebsmoment an einem epizyklischen Planetengetriebe 2 durchgeführt, um die implementierten Algorithmen zu testen. Hierbei konnte gezeigt werden, dass mit dem beschriebenen Ansatz eine Schätzung der Initialwinkelstellung Go möglich ist.

Die Ergebnisse werden nachfolgend kurz dargestellt.

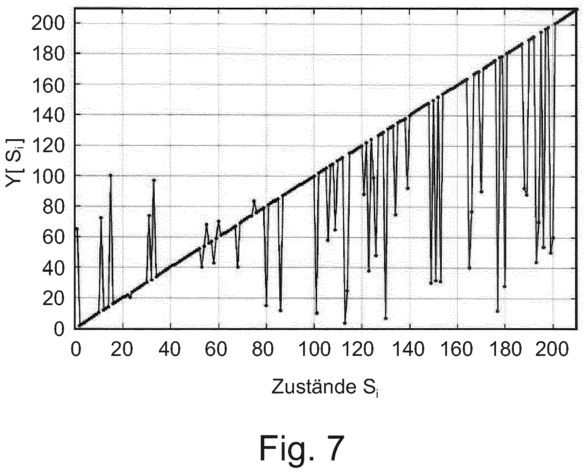

Die Fig. 7 zeigt die Zuordnung der beobachteten Emissionssequenz über zwei "Zahneingriffs-Periodizitäten" zu den einzelnen Verzahnungszuständen durch den vorab angelernten Klassifikator. Hierbei wurden mit 2 $n_{c,sPr}$= 70 Stegumdrehungen und einer Gesamtzahl von drei Planetenrädern $P_1$, $P_2$, $P_3$ insgesamt 210 Zustände $s_i$ innerhalb der beiden "Zahneingriffs-Periodizitäten" festgelegt. Damit beschreibt ein diskreter Zustand immer den Zeitpunkt, wenn sich eines der Planetenräder $P_1$, $P_2$, $P_3$ unterhalb einer am Hohlrad H angebrachten Beschleunigungssensorvorrichtung 1 befindet.

Die Darstellung in Fig. 7 zeigt die vom Klassifikator zugeordneten Zustände über den realen Zuständen $s_i$. Im

Falle einer korrekten Zuordnung aller beobachteten Zustände Y $(s_i)$ (siehe Fig. 3, Ausgang des Klassifikators in Schritt 413) würde sich in der gewählten Darstellungsweise in Fig. 7 eine Gerade mit der Steigung eins ergeben.

Entsprechende Ausreißer des Graphen sind als Fehlklassifizierungen zu bewerten. Hierbei zeigt sich, dass es einen nicht unerheblichen Anteil an Fehlklassifizierungen durch den Klassifikator gibt. Darüber hinaus ergeben sich aber auch Sequenzabschnitte mit einer Folge von korrekt zugeordneten Zuständen. Die bekannte und sich wiederholende Abfolge der auftretenden kinematischen Zustände wird durch den kombinierten Einsatz des Viterbi-Algorithmus mit dem angelernten Hidden Markov Modell, wie nachfolgend erläutert, gezielt ausgenutzt.

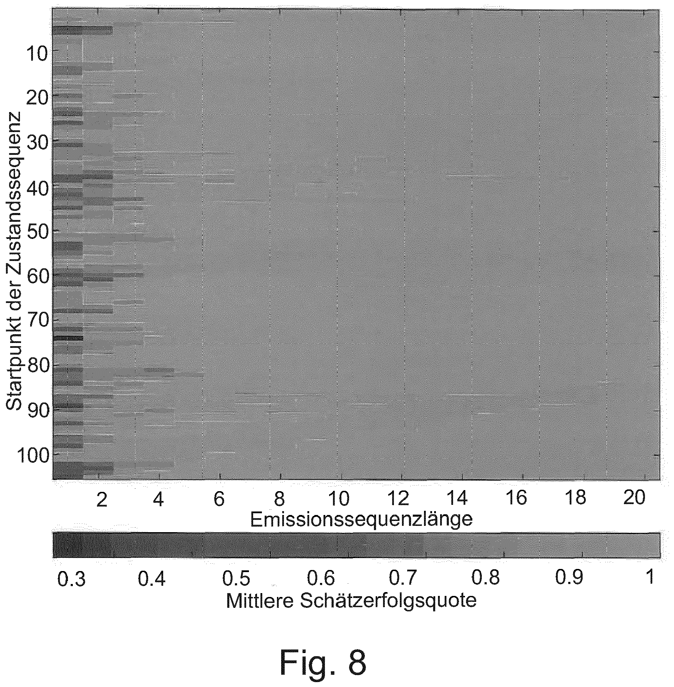

Die Fig. 8 zeigt die mittlere Erfolgsquote aller Messreihen bei variabler Drehzahl und Last hinsichtlich der geschätzten Initialwinkelstellung $G_0$. Dies stellt den Ausgang des Schrittes 415 in Fig. 4 dar.

Hierbei wurden immer gleiche Drehzahl-Last-Kombinationen jeweils für die Trainings- und die Testphase verwendet.

Die mittlere Erfolgsquote ist in Fig. 8 als Parameter in Abhängigkeit vom Startpunkt $s_i$ der Zustandssequenz ("Initial state") (y-Achse) und der Emissionssequenzlänge ("Length of observed state sequence") (x-Achse) aufgetragen.

Hierbei zeigte sich, dass bei einer betrachteten Sequenzlänge von 20 emittierten Zuständen eine 100-prozentige Erfolgsquote für die korrekte Schätzung der Initialwinkelstellung Go in den Testdaten erreicht werden konnte. Zudem kann in der Fig. 8 abgelesen werden, dass bei einer Emissionssequenzlänge von 20 die Erfolgsquote zudem vom betrachteten Startpunkt der Zustandssequenz unabhängig ist.

Trotz eines nicht unerheblichen Anteils an Fehlklassifizierungen, ist mit der Auswertung eine hohe Erfolgsquote bei der Zuordnung der Initialwinkelstellung Go mithilfe der vorgestellten Methode erreichbar. Das entwickelte Mustererkennungssystem weist ein gewisses Maß an Robustheit gegen Fehlklassifizierungen auf.

**Bezugszeichenliste**

1    Sensorvorrichtung
2    epizyklisches Planetengetriebe

$P_1$    erstes Planetenrad
$P_2$    zweites Planetenrad
$P_3$    drittes Planetenrad

C    Carrier (Planetenträger)
H    Hohlrad
S    Sonnenrad

**Patentansprüche**

1.  Verfahren zur Überwachung der Kinematik eines zu testenden epizyklischen Planetengetriebes (2),
    **dadurch gekennzeichnet, dass**

    a) in einer Trainingsphase (401, 402, 403) ein Modell (420) der Kinematik anhand von an einem epizyklischen Planetengetriebe (2) mittels einer Schwingungssensorvorrichtung (1) gemessenen Daten durch Mustererkennung ermittelt wird; wobei in der Folge
    b) das Modell (420) in einer Testphase (411, 412, 412) zur Mustererkennung in Schwingungsdaten eines zu testenden epizyklischen Planetengetriebes (2) verwendet wird, wobei durch die Mustererkennung Winkelstellungen mindestens eines Planetenrades ($P_1$, $P_2$, $P_3$, S) im zu testenden epizyklischen Planetengetriebe (2) ermittelt werden.

2.  Verfahren nach Anspruch 1, **dadurch gekennzeichnet, dass** durch die Mustererkennung in der Testphase (411, 412, 413) eine Schätzung einer Initialwinkelstellung ($G_0$) der Planetenräder ($P_1$, $P_2$, $P_3$) ermittelt wird.

3.  Verfahren nach Anspruch 1 oder 2, **dadurch gekennzeichnet, dass** das auf Grund der Mustererkennung ermittelte Modell (420) Hidden Markov Modellstruktur und / oder eine künstliche neuronale Netzstruktur aufweist.

4.  Verfahren nach mindestens einem der vorhergehenden Ansprüche, **dadurch gekennzeichnet, dass** sich die Trainingsphase (401, 402, 403) mindestens über die für eine Zahneingriffs-Periodizität ($n_{c,spr}$) notwendige Zeit, insbesondere über die Zeit für ein ganzzahliges Vielfaches der Zahneingriffs-Periodizität ($n_{c,spr}$) erstreckt.

5. Verfahren nach mindestens einem der vorhergehenden Ansprüche, **dadurch gekennzeichnet, dass** die Trainingsphase einen Vorverarbeitungsschritt (401) aufweist, in dem eine Filterung der Schwingungsdaten, eine Rauschunterdrückung der Schwingungsdaten, und / oder eine drehwinkelsynchrone Nachabtastung, insbesondere mit dem TSA-Algorithmus erfolgt und / oder einen Merkmalserkennungsschritt (402) aufweist.

6. Verfahren nach mindestens einem der vorhergehenden Ansprüche, **dadurch gekennzeichnet, dass** die Trainingsphase, insbesondere zeitlich nach dem Vorverarbeitungsschritt (401), einen Klassifikationsschritt (403) mit einem Klassifikator ausführt, wobei das Ergebnis der Klassifikation eine Ausgangswahrscheinlichkeitsmatrix (B) für das Hidden Markov Modell mit Parametern für das Modell (420) umfasst.

7. Verfahren nach Anspruch 6, **dadurch gekennzeichnet, dass** der Klassifikator einen k-nächste-Nachbar Algorithmus, eine Support Vector Machine und / oder ein künstliches neuronales Netz, insbesondere ein rekurrentes künstliches neuronales Netzaufweist.

8. Verfahren nach mindestens einem der vorhergehenden Ansprüche, **dadurch gekennzeichnet, dass** in der Testphase (411, 412, 413) zur Ermittlung einer wahrscheinlichsten Winkelzustandssequenz, insbesondere der Ermittlung eines Verzahnungszustandes, der am wahrscheinlichsten den beobachteten Schwingungssignalmustern in den erfassten Schwingungsdaten entspricht, ein Viterbi-Algorithmus eingesetzt wird.

9. Vorrichtung zur Überwachung der Kinematik eines zu testenden epizyklischen Planetengetriebes (2), **gekennzeichnet durch**
   ein Modell (420) für die Kinematik eines epizyklischen Planetengetriebes (2) gewonnen durch ein Mittel zum Training (401, 402, 403) des Modells (420) anhand von an epizyklischen Planetengetrieben (2) mit einer Schwingungssensorvorrichtung (1) gemessenen Daten und
   einem Mittel zur Mustererkennung in Schwingungsdaten eines zu testenden epizyklischen Planetengetriebes (2), wobei durch die Mustererkennung Winkelstellungen mindestens eines Zahnrades ($P_1$, $P_2$, $P_3$, S) im zu testenden epizyklischen Planetengetriebe (2) ermittelbar sind.

10. Vorrichtung nach Anspruch 9, **gekennzeichnet durch** ein Mittel zur Schätzung einer Initialwinkelstellung (Go) der Planetenräder ($P_1$, $P_2$, $P_3$) und / oder des Sonnenrades (S) in der Mustererkennung.

11. Vorrichtung nach Anspruch 9 oder 10, **dadurch gekennzeichnet, dass** das Modell (420) ein Hidden Markov Modell und / oder ein künstliches neuronales Netz aufweist.

12. Vorrichtung nach mindestens einem der Ansprüche 9 bis 11, **gekennzeichnet durch** ein Mittel zur Vorbereitung und / oder Mittel zur Erkennung eines Merkmals, mit dem eine Filterung der Schwingungsdaten, eine Rauschunterdrückung der Schwingungsdaten, eine rechnerische Eliminierung von Drehzahlschwankungen und / oder eine drehwinkelsynchrone Nachabtastung mit dem TSA-Algorithmus durchführbar ist.

13. Vorrichtung nach mindestens einem der Ansprüche 9 bis 12, **gekennzeichnet durch** einen Klassifikator zur Bestimmung einer Ausgangswahrscheinlichkeitsmatrix (B).

14. Vorrichtung nach Anspruch 13, **dadurch gekennzeichnet, dass** der Klassifikator eine Support Vector Machine und / oder ein künstliches neuronales Netz aufweist.

15. Vorrichtung nach mindestens einem der vorhergehenden Ansprüche, **dadurch gekennzeichnet, dass** in der Testphase (411, 412, 413) zur Ermittlung einer wahrscheinlichsten Zustandssequenz, insbesondere der Ermittlung eines Verzahnungszustandes, der am wahrscheinlichsten den beobachteten Schwingungssignalmustern in den erfassten Schwingungsdaten entspricht, ein Viterbi-Algorithmus einsetzbar ist.

**Fig. 1A**

**Fig. 1B**

**Fig. 1C**

**Fig. 1D**

Fig. 2

EP 3 457 106 A1

Fig. 3

Fig. 4

Fig. 5

Fig. 6

Fig. 7

Fig. 8

Europäisches
Patentamt

European
Patent Office

Office européen
des brevets

**EUROPÄISCHER RECHERCHENBERICHT**

**Nummer der Anmeldung**

EP 18 18 9768

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 051175 A1 (WITTENSTEIN AG [DE]) 15. April 2010 (2010-04-15) | 1,3-15 | INV. G01M13/02 F16H57/01 |
| A | * Abbildungen 1-4 * * Absätze [0001], [0013], [0019], [0031] * | 2 | ADD. F16H57/08 |
| | ----- | | |
| X | BLUNT ET AL: "Detection of a fatigue crack in a UH-60A planet gear carrier using vibration analysis", MECHANICAL SYSTEMS AND SIGNAL PROCES, ELSEVIER, AMSTERDAM, NL, Bd. 20, Nr. 8, 1. November 2006 (2006-11-01), Seiten 2095-2111, XP005597344, ISSN: 0888-3270, DOI: 10.1016/J.YMSSP.2006.05.010 | 9-15 | |
| A | * Abbildungen 1, 2 * * Seite 2096, Zeile 20 - Zeile 21 * * Seite 2099, Absatz 3 * | 3 | |
| | ----- | | |
| X | KR 2015 0137868 A (SNU R&DB FOUNDATION [KR]) 9. Dezember 2015 (2015-12-09) | 9-15 | RECHERCHIERTE SACHGEBIETE (IPC) |
| A | * Abbildungen 2-6 * * Absätze [0001], [0006], [0015], [0040] * | 4,5 | F16H G01M F02C |
| | ----- | | |
| A | WO 2010/006928 A1 (CONDUCTA ENDRESS & HAUSER [DE]; ALBER THOMAS [DE]; ANDELIC EDIN [DE];) 21. Januar 2010 (2010-01-21) * Seite 1, Absatz 1 * * Seite 3, Absatz 2 - Seite 4, Absatz 1 * | 6,7 | |
| | ----- | | |
| A | US 9 086 335 B2 (FLOWSERVE MANAGEMENT COMPANY, IRVING, TX (US)) 21. Juli 2015 (2015-07-21) * Spalte 10, Zeile 66 - Spalte 11, Zeile 19 * | 8 | |
| | ----- | | |

Der vorliegende Recherchenbericht wurde für alle Patentansprüche erstellt

| Recherchenort | Abschlußdatum der Recherche | Prüfer |
|---|---|---|
| München | 21. Januar 2019 | Gubovits, János |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 9768

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2019

| Im Recherchenbericht angeführtes Patentdokument | Datum der Veröffentlichung | Mitglied(er) der Patentfamilie | Datum der Veröffentlichung |
|---|---|---|---|
| DE 102008051175 A1 | 15-04-2010 | KEINE | |
| KR 20150137868 A | 09-12-2015 | KEINE | |
| WO 2010006928 A1 | 21-01-2010 | DE 102008032885 A1<br>WO 2010006928 A1 | 21-01-2010<br>21-01-2010 |
| US 9086335 B2 | 21-07-2015 | BR PI0621579 A2<br>CA 2649647 A1<br>CN 101473312 A<br>DE 112006003860 T5<br>GB 2452639 A<br>US 2010012874 A1<br>WO 2007123533 A1 | 13-12-2011<br>01-11-2007<br>01-07-2009<br>19-03-2009<br>11-03-2009<br>21-01-2010<br>01-11-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015209866 A1

**In der Beschreibung aufgeführte Nicht-Patentliteratur**

- **MCFADDEN.** Technique for calculating the time domain averages of the vibration of the individual planet gears and the sun gear in an epicyclic gearbox. *Journal of Sound and Vibration,* 1991, vol. 144 (1), 163-172
- **D'ELIA ; MUCCHI ; COCCONCELLI.** On the identification of the angularposition of gears forthe diagnostics of planetary gearboxes. *Mechanical Systems and Signal Processing,* 2017, vol. 83, 305-320
- Early Fault Detection for Gear Shaft and Planetary Gear Based on Wavelet and Hidden Markov Modeling. **YU.** Dissertation. University of Toronto, 2011
- **HA et al.** Autocorrelation-based time synchronous averaging for condition monitoring of planetary gearboxes in wind turbines. *Mechanical Systems and Signal Processing,* 2016, vol. 70-71, 161-175
- **MIAO et al.** A probabilistic description scheme for rotating machinery health evaluation. *Journal of Mechanical Science and Technology,* 2010, vol. 24 (12), 2421-2430
- **FORNEY.** The Viterbi algorithm. *Proceedings of the IEEE,* 1973, vol. 61 (3), 268-278
- **FELDMAN et al.** A Fast Maximum-Likelihood Decoder für Convolutional Codes. *Proceedings ofthe Vehicular Technology Conference, 2002-Fall, 2002 IEEE 56th,* 2002
- **HEIDER.** Schwingungsverhalten von Zahngetrieben: Beurteilung und Optimierung des Schwingungsverhaltens von Stirnrad- und Planetengetrieben. Verlag Dr. Hut, 2012
- **INALPOLAT, MURAT ; KAHRAMAN, AHMET.** A dynamic model to predict modulation sidebands of a planetary gear set having manufacturing errors. *Journal of Sound and Vibration,* 2010, vol. 329, 4